## Europäisches Patentamt
## European Patent Office
## Office européen des brevets

(11) Numéro de publication : **0 067 083**
**B1**

(12) # FASCICULE DE BREVET EUROPÉEN

(45) Date de publication du fascicule du brevet :
**13.06.84**

(51) Int. Cl.³ : **H 04 N 9/535**, H 04 N 9/09

(21) Numéro de dépôt : **82400821.3**

(22) Date de dépôt : **04.05.82**

(54) **Dispositif de correction des informations couleur fournies par une caméra de télévision, en vue d'améliorer la perception des images.**

(30) Priorité : **22.05.81 FR 8110253**

(43) Date de publication de la demande :
**15.12.82 Bulletin 82/50**

(45) Mention de la délivrance du brevet :
**13.06.84 Bulletin 84/24**

(84) Etats contractants désignés :
**BE DE FR GB NL**

(56) Documents cités :
**EP-A- 0 019 518**
**NACHRICHTENTECHNISCHE ZEITSCHRIFT, vol. 15, no. 8, août 1962, pages 371-379, Berlin (DE), H. STRAUSS: "Ein Gradationsentzerrungsgerät für Farbabtaster"**

(73) Titulaire : **THOMSON-CSF**
**173, Boulevard Haussmann**
**F-75379 Paris Cedex 08 (FR)**

(72) Inventeur : **Favreau, Michel**
**THOMSON-CSF SCPI 173, bld Haussmann**
**F-75379 Paris Cedex 08 (FR)**
Inventeur : **Soca, Serge**
**THOMSON-CSF SCPI 173, bld Haussmann**
**F-75379 Paris Cedex 08 (FR)**
Inventeur : **Bajon, Jean**
**THOMSON-CSF SCPI 173, bld Haussmann**
**F-75379 Paris Cedex 08 (FR)**

(74) Mandataire : **Turièque, Clotilde et al**
**THOMSON-CSF SCPI 173, Bld Haussmann**
**F-75379 Paris Cedex 08 (FR)**

Jouve, 18, rue St-Denis, 75001 Paris, France

## Description

La présente invention concerne les dispositifs de correction des informations couleur fournies par une caméra d'un système de transmission vidéo en vue d'obtenir en réception une image contenant le maximum d'informations visibles.

Dans les systèmes de transmission d'images en noir et blanc, il est déjà connu un dispositif de correction en vue d'améliorer la perception des images (demande de brevet européen n° 19518 déposée par la Demanderesse). Le procédé mis en œuvre par ce dispositif consiste à corriger le signal de luminance fourni par le tube analyseur d'une caméra noir et blanc à l'aide d'un quadripôle non linéaire à caractéristiques variables, commandé de telle façon que l'histogramme des valeurs du signal de luminance corrigé, a une forme plate quelles que soient les conditions de prises de vues, ce qui correspond à une répartition régulière des valeurs sur l'échelle de ces valeurs.

Tel qu'il est conçu actuellement, ce dispositif de correction ne permet pas d'améliorer les images couleur. Il permet seulement d'améliorer les images en noir et blanc.

La présente invention a pour objet un dispositif de correction permettant d'améliorer la perception des images couleur. Le problème consiste à corriger la luminance globale selon la méthode mise en œuvre par le dispositif connu tout en conservant la chromaticité originelle de l'image analysée.

Selon l'invention, un dispositif de correction des informations couleur, de valeurs $V_{e1}$, $V_{e2}$ et $V_{e3}$, fournies par une caméra de télévision, est caractérisé en ce qu'il comporte :
— un circuit de détermination (4) ayant trois entrées recevant respectivement les trois informations couleur et une sortie, pour fournir un signal de valeur $V_e$, fonction des valeurs des informations couleur ;
— un circuit de commande (6) ayant une entrée couplée à la sortie du circuit de détermination (4), et ayant une sortie, pour fournir un signal de valeur $G(V_e) = F(V_e)/V_e$, où F est une fonction telle que l'histogramme des valeurs $F(V_e)$ en fonction des valeurs $V_e$ a une répartition prédé-terminée, choisie pour améliorer la perception des images ;
— un circuit de correction (5) ayant trois premières entrées recevant respectivement les trois informations couleur, une deuxième entrée couplée à la sortie du circuit de commande, et ayant trois sorties constituant les sorties du dispositif selon l'invention, pour fournir trois signaux fonctions de la veleur $G(V_e)$ et des valeurs $V_{e1}$, $V_{e2}$, $V_{e3}$ respectivement.

L'invention sera mieux comprise et d'autres caractéristiques apparaîtront à l'aide de la description ci-après et des figures s'y rapportant :
la figure 1 représente un premier mode de réalisation du dispositif selon l'invention ;
la figure 2 représente un deuxième mode de réalisation du dispositif selon l'invention.

Dans le premier mode de réalisation le dispositif selon l'invention reçoit les trois informations couleur, de valeur $V_{e1}$, $V_{e2}$, $V_{e3}$, constituées respectivement des trois signaux de couleur bleu, vert, rouge, de valeurs $E_B$, $E_V$, $E_R$, appliqués respectivement à trois bornes d'entrées 1, 2 et 3. Il fournit sur trois bornes de sorties, 15, 16, 17 trois informations de couleur corrigées, de valeurs : $V_{S1}$, $V_{S2}$, $V_{S3}$.

La valeur de la luminance globale est :

$$E_Y = 0,11 \cdot E_B + 0,59 \cdot E_V + 0,3 \cdot E_R$$
$$= 0,11 \cdot V_{e1} + 0,59 \cdot V_{e2} + 0,3 \cdot V_{e3}$$

La correction de la luminance globale consiste à multiplier cette valeur par un coefficient varia-ble G :

$$E_Y \text{ corrigée} = E_Y \times G$$

La valeur $E_Y$ étant une combinaison linéaire de $E_V$, $E_R$, $E_B$, pour conserver la chromaticité il suffit de multiplier par le même coefficient G les trois valeurs $E_V$, $E_R$, $E_B$. Le coefficient G varie quand $E_Y$ varie, car il est déterminé de façon à aplanir l'histogramme des valeurs $V_e$ d'un signal qui est constitué, dans cet exemple de réalisation, par le signal de luminance globale. Le dispositif de correction selon l'invention fournit dans ce cas trois signaux de couleur ayant pour valeur corrigée :

$$V_{S1} = G(V_e) \cdot V_{e1} \text{ avec } V_e = E_Y$$
$$V_{S2} = G(V_e) \cdot V_{e2} \text{ avec } V_{e1} = E_B$$
$$V_{S3} = G(V_e) \cdot V_{e3} \text{ avec } V_{e2} = E_V$$
$$V_{e3} = E_R$$

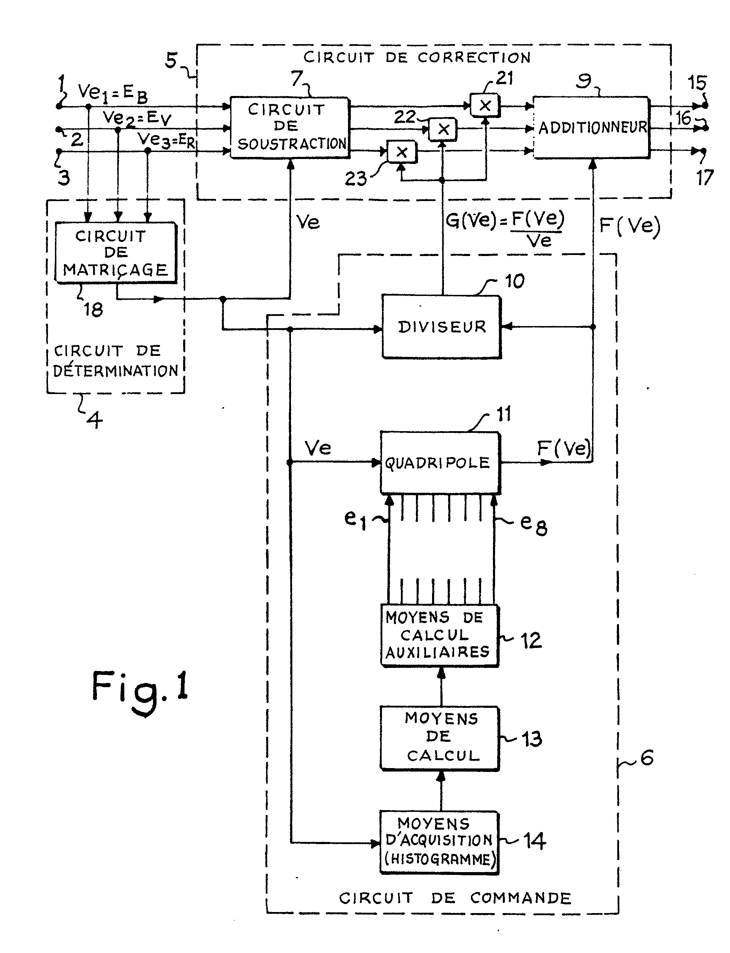

La figure 1 représente un schéma synoptique du premier mode de réalisation du dispositif selon l'invention, qui met en œuvre ce procédé.

Sur cette figure, sont représentées trois bornes d'entrée 1, 2 et 3 destinées à recevoir respectivement les trois signaux couleur $V_{e1}$, $V_{e2}$ et $V_{e3}$ fournis par les tubes analyseurs d'une caméra couleur. Ces trois bornes d'entrée sont respectivement couplées aux trois entrées d'un circuit 4 de détermination d'un signal $V_e$, constitué par un circuit de matriçage 4. La sortie de ce circuit de matriçage 4 délivre le signal $V_e$, qui est constitué, dans cet exemple, du signal de luminance globale. Ce signal est déduit des informations cou-leur $V_{e1}$, $V_{e2}$ et $V_{e3}$ selon la formule suivante : $V_e = 0,11 \cdot V_{e1} + 0,59 \cdot V_{e2} + 0,3 \cdot V_{e3} \cdot (V_{e1}, V_{e2}$ et $V_{e3})$ correspondant respectivement aux signaux de couleur bleu, vert et rouge).

La sortie du circuit de matriçage 4 est connectée à une entrée d'un circuit de commande 6. Le circuit de commande 6 comporte des moyens 14 d'acquisition d'un histogramme, un quadripôle analogique 11 et un diviseur analogique 10, ayant chacun une entrée reliée à l'entrée du circuit de commande 6, et il comporte en outre des moyens de calcul 13 et des moyens de calcul auxiliaires 12. Le quadripôle 11 est non linéaire et a des caractéristiques variables réglables par huit entrées de commande $e_1$ à $e_8$ destinées à recevoir huit signaux définissant les paramètres de transfert du quadripôle. Ce quadripôle 11 est de type connu ayant une fonction de transfert en ligne brisée constituée d'un nombre prédéterminé de segments linéaires. Dans l'exemple décrit, le quadripôle 11 a été choisi à huit paramètres de transfert variables, soit quatre couples, constitués d'une valeur de seuil et d'une valeur de gain, définissant quatre segments. Un tel quadripôle comporte quatre amplificateurs (non représentés), ayant un seuil réglable au-dessous duquel aucun signal n'est transmis et au-dessus duquel les signaux sont transmis avec un gain fixé. Ainsi, le quadripôle 11 délivre un signal de luminance corrigé $F(V_e)$, F étant la fonction de transfert du quadripôle. Ce signal $F(V_e)$ correspond à la somme des quatre signaux de sortie des quatre amplificateurs du quadripôle, il est fourni à une deuxième entrée du diviseur 10 et à une deuxième sortie du circuit de commande 6.

Les moyens 14 analysent statistiquement la répartition en amplitude de 4 000 échantillons du signal de luminance $V_e$, selon 64 niveaux d'amplitude donnés. Les 4 000 échantillons résultent de l'analyse de 4 000 domaines recouvrant toute une trame, et les 64 niveaux d'amplitude sont répartis suivant des intervalles réguliers sur toute l'échelle des amplitudes de la luminance. Les moyens 14 permettent donc d'acquérir la fonction représentative de l'histogramme de la luminance (nombre d'échantillons pour chacun des 64 niveaux envisagés).

Les moyens de calcul 13, dont l'entrée est reliée à la sortie des moyens 14, calculent l'intégrale de cette fonction, cette intégrale étant, par définition, la fonction de répartition cumulative des niveaux d'amplitude des échantillons.

A partir de cette fonction de répartition cumulative, les moyens de calcul auxiliaires 12, ayant une entrée reliée à la sortie des moyens 13 et huit sorties respectivement reliées aux huit entrées de commande $e_1$ à $e_8$ du quadripôle 11, calculent les valeurs des huit paramètres de transfert $A_1$ à $A_4$ et $G_1$ à $G_4$ à appliquer aux entrées de commande $e_1$ à $e_8$, $A_i$ à $G_i$ (i variant de 1 à 4) représentant respectivement les valeurs de seuil et les valeurs de gain des amplificateurs du quadripôle. Les valeurs calculées sont telles que la fonction de transfert F réalisée par le quadripôle 11 est une approximation par segments de la fonction de répartition cumulative calculée par les moyens 13. Les valeurs de paramètres ainsi déterminées restent fixées pendant la durée de la trame suivante.

Une telle fonction de transfert transforme le signal de luminance $V_e$ en un signal corrigé $F(V_e)$ pour lequel la répartition des valeurs permet une meilleure vision quelles que soient les conditions de prise de vues. (Dans cet exemple la répartition correspond à une égalisation de l'histogramme de la luminance associée au signal $F(V_e)$.)

L'ensemble constitué par le quadripôle 11, les moyens 14 d'acquisition d'un histogramme, les moyens de calcul 13 et les moyens de calcul auxiliaires 12, correspond exactement au dispositif de commande automatique décrit en détails dans la demande de brevet citée au début de ce texte. Le circuit de commande 6 comporte en plus le diviseur analogique 10 ayant deux entrées recevant respectivement des signaux de valeur $V_e$ et $F(V_e)$, et ayant une sortie, constituant la première sortie du circuit de commande, et fournissant un signal de valeur $G(V_e) = F(V_e)/V_e$.

Le but de l'invention est de corriger les informations couleurs $V_{e1}$, $V_{e2}$ et $V_{e3}$ afin que l'information de luminance globale, associée aux informations couleur corrigées, corresponde à l'information de luminance contenue dans le signal $F(V_e)$ tout en conservant la chromaticité originelle de l'image analysée. Pour cela, les trois bornes d'entrée 1, 2 et 3 sont respectivement reliées aux trois premières entrées d'un circuit de correction 5 dont une deuxième entrée, une troisième et une quatrième entrées sont reliées respectivement à la première sortie du circuit de commande 6, à la sortie du circuit de détermination 4, et à la deuxième sortie du circuit de commande 6. Le circuit de correction 5 est constitué, dans cet exemple de réalisation, par un circuit de soustraction 7 ayant les trois premières entrées constituant les trois premières entrées du circuit de correction 5, par trois multiplicateurs analogiques 21, 22, 23 ayant trois premières entrées reliées respectivement à trois sorties du circuit de soustraction 7, ayant trois secondes entrées reliées ensemble pour constituer la deuxième entrée du circuit de correction 5, et ayant trois sorties reliées respectivement à trois entrées d'un additionneur 9. Le circuit de soustraction 7 possède une seconde entrée constituant la troisième entrée du circuit de correction. L'additionneur 9 possède une seconde entrée constituant la quatrième entrée du circuit de correction 5 et trois sorties constituant respectivement trois sorties du circuit de correction 5, qui sont reliées aux trois bornes de sortie 15, 16, 17 du dispositif selon l'invention. La deuxième et la quatrième entrée du circuit de correction 5 reçoivent respectivement une valeur $G(V_e) = F(V_e)/V_e$ fournie par la sortie du diviseur 10 et la valeur $F(V_e)$ fournie par la sortie du quadripôle 11. Le circuit de soustraction 7 comporte trois sorties fournissant respectivement trois signaux de différence de couleur $DV_{e1}$, $DV_{e2}$ et $DV_{e3}$. Ces trois signaux sont élaborés à partir des signaux $V_{e1}$, $V_{e2}$, $V_{e3}$ et $V_e$ selon les formules suivantes :

$$DV_{e1} = V_{e1} - V_e$$
$$DV_{e2} = V_{e2} - V_e$$
$$DV_{e3} = V_{e3} - V_e$$

Les multiplicateurs 21, 22, 23 élaborent respectivement trois signaux $DV_{S1}$, $DV_{S2}$ et $DV_{S3}$ à partir des signaux $G(V_e)$, $DV_{e1}$, $DV_{e2}$ et $DV_{e3}$ selon les formules suivantes

$$DV_{S1} = DV_{e1} \cdot G(V_e)$$
$$DV_{S2} = DV_{e2} \cdot G(V_e)$$
$$DV_{S3} = DV_{e3} \cdot G(V_e)$$

Les trois sorties de l'additionneur 9 fournissent respectivement trois signaux $V_{S1}$, $V_{S2}$ et $V_{S3}$ élaborés à partir des signaux $DV_{S1}$, $DV_{S2}$, $DV_{S3}$ et $F(V_e)$ selon les formules suivantes :

$$V_{S1} = DV_{S1} + F(V_e)$$
$$V_{S2} = DV_{S2} + F(V_e)$$
$$V_{S3} = DV_{S3} + F(V_e)$$

Selon le principe qui vient d'être explicité, le circuit de correction 5 transforme les informations couleur $V_{e1}$, $V_{e2}$ et $V_{e3}$ associées au signal de luminance globale $V_e$ en des informations couleur corrigées $V_{S1}$, $V_{S2}$ et $V_{S3}$ associées au signal de luminance globale corrigé $F(V_e)$. Ainsi, seule la luminance globale a été corrigée. La chromaticité originelle de l'image analysée n'est pas affectée par la correction apportée par le circuit de correction 5.

L'invention n'est pas limitée au mode de réalisation décrit et représenté, de nombreuses variantes de réalisation sont possibles. En particulier, le quadripôle 11 peut comporter un nombre quelconque de paramètres variables afin de mieux adapter la fonction de transfert à la fonction de répartition cumulative ; il en est de même du nombre d'échantillons et du nombre de niveaux d'amplitude du signal de luminance.

Il a été pris comme exemple d'obtenir une égalisation de l'histogramme, mais toute autre répartition aurait pu être envisagée, ce qui aurait conduit à calculer une fonction de transfert différente de la fonction de répartition cumulative.

Il faut noter que le dispositif de commande 6 ou l'un de ses éléments peuvent facilement être réalisés à l'aide d'un micro-ordinateur.

Il faut aussi noter que l'opération globale effectuée sur les signaux $V_{e1}$, $V_{e2}$ et $V_{e3}$ par le circuit de correction 5 consiste à multiplier chacun des trois signaux par le signal $G(V_e)$. En effet, il est facile de vérifier que :

$$V_{S1} = G(V_e) \cdot V_{e1}$$
$$V_{S2} = G(V_e) \cdot V_{e2}$$
$$V_{S3} = G(V_e) \cdot V_{e3}$$

Il est donc possible de réaliser le circuit de correction 5 d'une façon différente que celle précédemment décrite, en supprimant le circuit de soustraction 7 et l'additionneur 9. Le mode de réalisation décrit précédemment et représenté sur la figure 1 est plus complexe, mais il permet d'obtenir plus facilement la largeur de bande passante requise pour le signal de luminance.

Il est également possible de générer directement le signal $G(V_e)$ à l'aide d'une mémoire numérique. Le signal analogique $V_e$ est alors converti en valeurs numériques qui sont appliquées aux entrées d'adresse d'une mémoire dans laquelle un micro-ordinateur a préalablement stocké les valeurs de $G(V_e)$. La sortie de la mémoire est ensuite reliée à l'entrée d'un convertisseur numérique-analogique qui délivre le signal $G(V_e)$.

Dans le mode de réalisation décrit, le circuit de matriçage 4 élabore un signal $V_e$ qui correspond au signal de luminance globale calculé avec les coefficients classiques (0,11 ; 0,59 ; 0,3). Mais l'invention est applicable à partir d'un signal $V_e$ correspondant à une combinaison différente des informations couleurs. Par exemple, d'excellents résultats ont été obtenus en prenant comme signal $V_e$ le signal correspondant à max $(V_{e1}$ ; $V_{e2}$ ; $V_{e3})$.

Enfin, il faut noter que l'invention peut facilement être appliquée à partir des trois signaux couleur $E_Y$, $D_R$, $D_B$, transmis en télévision couleur. En effet, le traitement à faire subir à ces trois signaux se déduit simplement de celui exposé pour les trois signaux primaires $E_B$, $E_V$ et $E_R$, ces deux triplets de signaux étant liés par des relations linéaires.

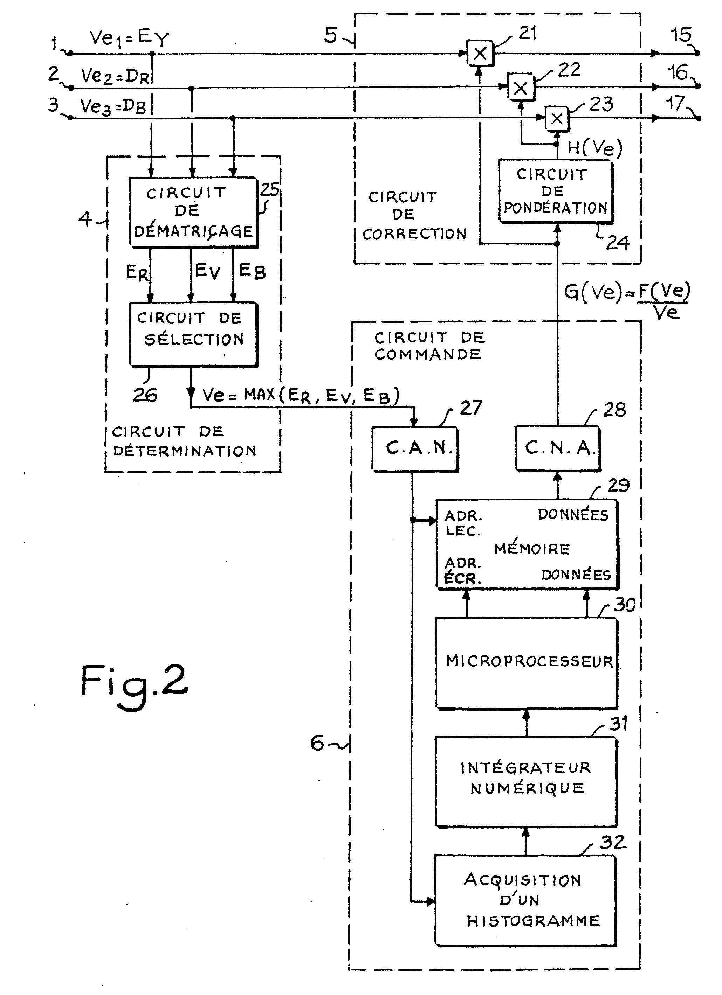

La figure 2 représente un deuxième mode de réalisation du dispositif selon l'invention. D'une part, dans ce mode de réalisation le circuit de détermination 4 fournit un signal de valeur $V_e$ qui n'est pas égale à la valeur de luminance globale, mais qui est égale à la plus grande des valeurs parmi celles des trois signaux de couleur, $E_R$, $E_V$, $E_B$ à l'instant d'échantillonnage considéré :

$$V_e = Max(E_R, E_V, E_B).$$

D'autre part, la correction consiste à corriger la luminance globale en conservant la chromaticité originelle de l'image lorsque la valeur $G(V_e)$ est élevée, mais non lorsqu'elle est faible. Dans le premier cas, la valeur corrigée de la luminance est supérieure à la valeur d'origine, le dispositif ne modifie pas la saturation de la couleur. Dans ce deuxième cas la valeur corrigée de la luminance est inférieure à la valeur d'origine, la perception de l'image est améliorée en augmentant la saturation de la couleur tout en conservant la même teinte. Les signaux de valeurs $V_{e1}$, $V_{e2}$, $V_{e3}$, sont constitués par le signal de luminance globale de valeur $E_Y$, et les signaux de différence de couleur, de valeurs $D_R$ et $D_B$. Le circuit de commande 6 élabore la valeur $G(V_e)$ par un procédé numérique mis en œuvre par un microprocesseur.

Dans ce mode de réalisation un circuit de détermination 4 est constitué par un circuit de dématriçage 25 ayant trois entrées constituant trois entrées du circuit de détermination 4, et trois sorties fournissant des signaux de couleur de valeur $E_R$, $E_V$ et $E_B$, à trois entrées d'un circuit de sélection 26 qui détermine laquelle de ces valeurs est la plus grande et achemine celle-ci vers une sortie constituant la sortie du circuit de détermination 4. La valeur $V_e$ ainsi déterminée est appliquée à une entrée du circuit de commande 6.

Le circuit de commande 6 comporte un convertisseur analogique-numérique 27 dont l'entrée constitue l'entrée du circuit de commande 6 et qui convertit la valeur $V_e$ de la forme analogique à la forme numérique. Le circuit de commande 6 comporte un convertisseur numérique-analogique 28 dont la sortie constitue une sortie du circuit de commande 6 et fournit sous forme analogique un signal de valeur $G(V_e)$. Le circuit de commande 6 comporte en outre des moyens 32 d'acquisition d'un histogramme, un intégrateur numérique 31, un microprocesseur 30, et une mémoire vive 29. Les moyens 32 calculent pour chaque trame d'une image l'histogramme de 4 000 valeurs $V_e$ fournies par la sortie du convertisseur analogique-numérique 27, et fournissent les valeurs de cet histogramme à l'intégrateur numérique 31 qui calcule les valeurs de la fonction de la répartition cumulative de cet histogramme et les fournit à une entrée du microprocesseur 30. Le microprocesseur 30 possède deux sorties reliées respectivement à une entrée d'adresse d'écriture et à une entrée de données de la mémoire 29. Il calcule une table des valeurs de la fonction $G(V_e)$ et stocke cette table dans la mémoire 29. Ce calcul est réalisé en deux étapes : une première étape consiste à déterminer une fonction F telle que l'histogramme des valeurs du signal corrigé $F(V_e)$ a une répartition prédéterminée sur l'ensemble de son échelle de valeurs. Par exemple, pour avoir une répartition régulière il suffit que la fonction $F(V_e)$ soit égale à la fonction de répartition cumulative des valeurs $V_e$. Dans une deuxième étape le microprocesseur 30 calcule les valeurs de la fonction $G(V_e) = F(V_e)/V_e$, en tenant compte d'une limitation de la valeur $G(V_e)$ à 4, dans cet exemple, afin de ne jamais dénaturer l'image et de ne pas amplifier le bruit au point de le rendre visible. Dans cet exemple, le microprocesseur 30 calcule 64 valeurs de $G(V_e)$, chacune de ces valeurs étant choisies parmi 256 valeurs possibles, codées sur huit bits. Ces valeurs sont stockées dans la mémoire 29 qui comporte 256 octets. Cette mémoire comporte une entrée d'adresse de lecture reliée à la sortie du convertisseur analogique-numérique 27, et une sortie de données reliée à l'entrée du convertisseur numérique-analogique 28. Pour chaque point d'une image la sortie du circuit de détermination 4 fournit une valeur $V_e$ qui est transmise sous forme numérique à l'entrée d'adresse de lecture de la mémoire 29, celle-ci fournit sur sa sortie de données une valeur numérique $G(V_e)$ qui est convertie sous la forme analogique par le convertisseur numérique-analogique 28, et qui est appliquée à la sortie du circuit de commande 6.

Le circuit de correction 5 comporte trois multiplicateurs analogiques 21, 22 et 23 ayant trois premières entrées et trois sorties, constituant respectivement trois premières entrées et trois sorties du circuit de correction 5, et ayant trois secondes entrées. La seconde entrée du multiplicateur 21 est reliée à une seconde entrée du circuit de correction 5 et les secondes entrées des multiplicateurs 22 et 23 sont reliées ensemble à la sortie d'un circuit de pondération 24 ayant une entrée reliée à une deuxième entrée du circuit de correction 5.

Le circuit de pondération 24 est un circuit analogique fournissant sur sa sortie un signal de valeur $H(V_e)$ égale à 1 quand $G(V_e)$ est inférieure ou égale à 1, et un signal de valeur $H(V_e)$ égale à $G(V_e)$ quand $G(V_e)$ est supérieure à 1. La valeur $G(V_e)$ est transmise sans modification lorsqu'elle est élevée, ainsi la chromaticité est conservée lorsque la correction consiste à augmenter la luminance d'une teinte, et par contre la saturation de la couleur est augmentée lorsque la luminance d'une teinte est diminuée.

Il est à la portée de l'homme de l'art de réaliser un circuit de pondération 24 fonctionnant différemment, il est notamment possible d'utiliser un circuit de pondération fournissant une valeur telle que : $H(V_e) : 1/2 \cdot G(V_e) + 1/2$.

Dans ce cas il y a une augmentation de la saturation de la couleur quand la luminance globale est diminuée, et diminution de la saturation de ces couleurs quand la luminance globale est augmentée.

Il est aussi à la portée de l'homme de l'art de réaliser différemment le circuit de détermination 4 et de prendre pour valeur $V_e$ une autre combinaison des signaux de couleurs. Prendre $V_e = \text{Max}(E_R, E_V, E_B)$ permet d'éviter une correction exagérée du signal de luminance lorsque l'une des valeurs des signaux de couleur est très supérieure aux deux autres.

## Revendications

1. Dispositif de correction des informations couleur, de valeurs $V_{e1}$, $V_{e2}$ et $V_{e3}$, fournies par une caméra de télévision, caractérisé en ce qu'il comporte :
— un circuit de détermination (4) ayant trois entrées recevant respectivement les trois informations couleur et une sortie, pour fournir un signal de valeur $V_e$, fonction des valeurs des informations couleur ;
— un circuit de commande (6) ayant une entrée couplée à la sortie du circuit de détermination (4), et ayant une sortie, pour fournir un signal de valeur $G(V_e) = F(V_e)/V_e$, où F est une fonction telle que l'histogramme des valeurs $F(V_e)$ en fonction des valeurs $V_e$ a une répartition prédéterminée, choisie pour améliorer la perception des images ;
— un circuit de correction (5) ayant trois premières entrées recevant respectivement les trois informations couleur, une deuxième entrée couplée à la sortie du circuit de commande, et ayant trois sorties constituant les sorties du dispositif selon l'invention, pour fournir trois signaux fonctions de la valeur $G(V_e)$ et des valeurs $V_{e1}$, $V_{e2}$, $V_{e3}$ respectivement.

2. Dispositif selon la revendication 1, caractérisé en ce que les informations couleurs sont constituées des signaux de couleur bleu, vert, rouge, ayant pour valeur $E_B$, $E_V$, $E_R$ ; et en ce que le circuit de correction (5) fournit trois informations couleur corrigées ayant pour valeur $E_B \cdot G(V_e)$, $E_V \cdot G(V_e)$, $E_R \cdot G(V_e)$.

3. Dispositif selon la revendication 1, caractérisé en ce que les informations couleurs sont constituées par le signal de luminance globale et deux signaux de différence de couleur, ayant respectivement pour valeur $E_Y$, $D_R$, $D_B$ ; et en ce que le circuit de correction (5) fournit des informations couleur corrigées de valeur $E_Y \cdot G(V_e)$, $D_R \cdot H(V_e)$ et $D_B \cdot H(V_e)$, où $H(V_e)$ est égale à la valeur $G(V_e)$ pondérée par un coefficient variable en fonction de la valeur $G(V_e)$.

4. Dispositif selon la revendication 2, caractérisé en ce que le circuit de commande (6) comporte en outre une deuxième sortie, fournissant un signal de valeur $F(V_e)$ ; et en ce que le circuit de correction (5) comporte :

— un premier, un deuxième, et un troisième multiplicateur (21, 22, 23) ayant chacun une première et une seconde entrée, et une sortie, les secondes entrées étant reliées à la deuxième entrée du circuit de correction (5) ;

— une troisième entrée reliée à la sortie du circuit de détermination (4) ;

— une quatrième entrée reliée à la deuxième sortie du circuit de commande (6) ;

— un circuit de soustraction (7) ayant trois premières entrées reliées respectivement aux trois premières entrées du circuit de correction (5), une deuxième entrée reliée à la troisième entrée du circuit de correction (5), et trois sorties reliées respectivement aux trois premières entrées des multiplicateurs (21, 22, 23) pour fournir respectivement des valeurs $V_{e1} - V_e$, $V_{e2} - V_e$, $V_{e3} - V_e$ ;

— un circuit additionneur (9) ayant trois premières entrées reliées respectivement aux trois sorties des multiplicateurs (21, 22, 23), une deuxième entrée reliée à la quatrième entrée du circuit de correction (5) et trois sorties reliées respectivement aux trois sorties du circuit de correction (5), pour fournir respectivement des valeurs $DV_{S1} + F(V_e)$, $DV_{S2} + F(V_e)$, $DV_{S3} + F(V_e)$, où $DV_{S1}$, $DV_{S2}$, $DV_{S3}$ sont des valeurs fournies respectivement par les sorties des trois multiplicateurs (21, 22, 23).

5. Dispositif selon la revendication 1, caractérisé en ce que le dispositif de commande (6) comporte :

— un quadripôle (11) non linéaire à caractéristiques variables, ayant une entrée de commande permettant de régler sa fonction de transfert, une entrée reliée à l'entrée du circuit de commande (6), et ayant une sortie, pour fournir un signal de valeur $F(V_e)$ ;

— un diviseur (10) ayant une première entrée, reliée à l'entrée du dispositif de commande (6), une deuxième entrée reliée à la sortie du quadripôle (11), et une sortie reliée à la première sortie du dispositif de commande (6), pour fournir un signal de valeur $G(V_e) = F(V_e)/V_e$ ;

— des moyens (12, 13, 14) pour déterminer l'histogramme des valeurs $V_e$ puis la fonction de répartition cumulative de ces valeurs et en déduire des valeurs de paramètres définissant la fonction F et tels que l'histogramme des valeurs $F(V_e)$ en fonction des valeurs $V_e$ a une répartition prédéterminée, ayant une entrée reliée à l'entrée du circuit de commande (6) et ayant une sortie reliée à l'entrée de commande du quadripôle (11).

6. Dispositif selon la revendication 1, caractérisé en ce que le circuit de commande (6) comporte :

— des moyens (31, 32) pour déterminer l'histogramme des valeurs $V_e$ puis la fonction de répartition cumulative de ces valeurs et en déduire les valeurs de la fonction $F(V_e)$, telle que son histogramme en fonction des valeurs de $V_e$ a une répartition prédéterminée, ayant une entrée couplée à l'entrée du circuit de commande et une sortie ;

— un microprocesseur (30) ayant une entrée reliée à la sortie de ces moyens (31, 32), ayant une sortie de données et une sortie d'adresse, pour calculer les valeurs de $F(V_e)/V_e$ ;

— une mémoire vive (29), pour stocker les valeurs de $F(V_e)/V_e$, ayant une entrée d'adresse d'écriture reliée à la sortie d'adresse du microprocesseur (30), une entrée de données reliée à la sortie de données du microprocesseur (30) et une entrée d'adresse de lecture couplée à l'entrée du circuit de commande (6) et ayant une sortie de données couplée à la sortie du circuit de commande (6).

7. Dispositif selon la revendication 1, caractérisé en ce que le signal de valeur $V_e$, est constitué par celui des signaux d'informations couleur ayant la plus grande valeur à l'instant d'échantillonnage considéré.

**Claims**

1. Device for the correction of color informations of the values $V_{e1}$, $V_{e2}$ and $V_{e3}$, furnished by a television camera, characterized in that it comprises ;

— a determination circuit (4) having three inputs receiving respectively the three color informations and an output for furnishing a signal of value $V_e$ which depends on the color information values ;

— a control circuit (6) whose input is coupled to the output of the determination circuit (4) and whose output furnishes a signal of the value $G(V_e) = F(V_e)/V_e$, where F is a function such that the histogram of the values $F(V_e)$ in dependence upon the values $V_e$ has a predetermined distribution selected to improve the perception of the images ;

— a correction circuit (5) having three first inputs receiving respectively the three color informations, a second input coupled to the output of the control circuit, and having three outputs constituting the outputs of the device according to the invention for furnishing three signals in dependence upon the value $G(V_e)$ and the values $V_{e1}$, $V_{e2}$ and $V_{e3}$ respectively.

2. Device according to claim 1, characterized in that the color information is formed from signals for the colors blue, green and red having the values $E_B$, $E_V$ and $E_R$ ; and that the correction circuit (5) furnishes the three corrected color information having the values $E_B \cdot G(V_e)$, $E_V \cdot G(V_e)$, $E_R \cdot G(V_e)$.

3. Device according to claim 1, characterized in that the color information are constituted by the total luminance signal and two color difference signals having respectively the values $E_Y$, $D_R$, $D_B$ ; and that the correction circuit (5) furnishes corrected color informations having the values $E_Y \cdot G(V_e)$, $D_R \cdot H(V_e)$, $D_B \cdot H(V_e)$, wherein $H(V_e)$ is equal to the value $G(V_e)$ weighted with a coefficient variable as a function of the value $G(V_e)$.

4. Device according to claim 2, characterized in that the control circuit (6) further comprises a second output furnishing a signal of value $F(V_e)$ ; and that the correction circuit (5) comprises :

— a first, a second and a third multiplier (21, 22, 23) each having a first and a second input and an output, the second inputs being connected to the second input of the correction circuit (5) ;

— a third input connected to the output of the determination circuit (4) ;

— a fourth input connected to the second output of the control circuit (6) ;

— a subtraction circuit (7) having three first inputs connected respectively to the three first inputs of the correction circuit (5), a second input connected to the third input of the correction circuit (5), and three outputs connected respectively to the three first inputs of the multipliers (21, 22, 23) for furnishing the values $V_{e1} - V_e$, $V_{e2} - V_e$, $V_{e3} - V_e$ respectively ;

— an adding circuit (9) having three first inputs connected respectively to the three outputs of the multipliers (21, 22, 23), a second input connected to the fourth input of the correction circuit (5) and three outputs connected respectively to the three outputs of the correction circuit (5) for furnishing respectively the values $DV_{S1} + F(V_e)$, $DV_{S2} + F(V_e)$, $DV_{S3} + F(V_e)$ where $DV_{S1}$, $DV_{S2}$, $DV_{S3}$ are the values furnished respectively by the outputs of the three multipliers (21, 22, 23).

5. Device according to claim 1, characterized in that the control device (6) comprises :

— a non-linear quadripole (11) of variable characteristics having a control input for adjusting its transfer function, an input connected to the input of the control circuit (6) and an output furnishing a signal of value $F(V_e)$ ;

— a divider (10) having a first input connected to the input of the control device (6), a second input connected to the output of the quadripole (11), and an output connected to the first output of the control device (6) for furnishing a signal of value $G(V_e) = F(V_e)/V_e$ ;

— means (12, 13, 14) for determining the histogram of the values $V_e$ and the cumulative distribution function of said values and deriving therefrom values of parameters defining the function f and being such that the histogram of the values $F(V_e)$ has a predetermined distribution in dependence upon the values of $V_e$, having an input connected to the input of the control circuit (6) and having an output connected to the control input of the quadripole (11).

6. Device according to claim 1, characterized in that the control circuit (6) comprises :

— means (31, 32) for determining the histogram of the values $V_e$ and the cumulative distribution function of said values and deriving therefrom the values of the function $F(V_e)$ such that its histogram has a predetermined distribution in dependence upon the values of $V_e$, having an input coupled to the input of the control circuit and an output ;

— a microprocessor (30) having an input connected to the output of said means (31, 32), having a data output and an address output for calculating the values of $F(V_e)/V_e$ ;

— a random access memory (29) for storing the values of $F(V_e)/V_e$, having a write address input connected to the address output of the microprocessor (30), a data input connected to the data output of the microprocessor (30) and a read address input coupled to the input of the control circuit (6), and having a data output couplet to the output of the control circuit (6).

7. Device according to claim 1, characterized in that the signal of value $V_e$ is formed by that one of the color information signals which has the greatest value at the scanning instant considered.

## Ansprüche

1. Vorrichtung zur Korrektur der Farbinformationen mit den Werten $V_{e1}$, $V_{e2}$ und $V_{e3}$, die von einer Fernsehkamera geliefert werden, dadurch gekennzeichnet, daß sie umfaßt ;

— eine Bestimmungschaltung (4) mit drei Eingängen, die jeweils eine der Farbinformationen empfangen, und einem Ausgang, der ein Signal mit dem Wert $V_e$ abgibt, welcher von den Farbinformationswerten abhängt ;

— eine Steuerschaltung (6), deren Eingang an den Ausgang der Bestimmungsschaltung (4) angekoppelt ist und deren Ausgang ein Signal mit dem Wert $G(V_e) = F(V_e)/V_e$ liefert, worin F eine solche Funktion ist, daß das Histogramm der Werte $F(V_e)$ in Abhängigkeit von den Werten $V_e$ eine vorbestimmte Verteilung hat, die so gewählt ist, daß die Bildwahrnehmung verbessert wird ;

— eine Korrekturschaltung (5) mit drei ersten Eingängen, die jeweils eine der drei Farbinformationen empfangen, einem zweiten Eingang, der an den Ausgang der Steuerschaltung angekoppelt ist, und drei Ausgängen, welche die Ausgänge der erfindungsgemäßen Vorrichtung bilden, um drei Signale zu liefern, die Funktionen des Wertes $G(V_e)$ und des Wertes $V_{e1}$ bzw. $V_{e2}$ bzw. $V_{e3}$ sind.

2. Vorrichtung nach Anspruch 1, dadurch gekennzeichnet, daß die Farbinformationen aus Signalen für die Farben Blau, Grün und Rot gebildet sind, deren Werte $E_B$, $E_V$ und $E_R$ sind ; und daß die Korrekturschaltung (5) drei korrigierte Farbinformationen liefert, deren Werte $E_B \cdot G(V_e)$ bzw. $E_V \cdot G(V_e)$ bzw. $E_R \cdot G(V_e)$ sind.

3. Vorrichtung nach Anspruch 1, dadurch gekennzeichnet, daß die Farbinformationen durch das Gesamtluminanzsignal und zwei Farbdifferenzsignale gebildet sind, deren Werte $E_Y$ bzw. $D_R$ bzw. $D_B$ sind; und daß die Korrekturschaltung (5) korrigierte Farbinformationen mit den Werten $E_Y \cdot G(V_e)$ bzw. $D_R \cdot H(V_e)$ bzw. $D_B \cdot H(V_e)$ liefert, worin $H(V_e)$ gleich dem mit einem Koeffizienten, der in Funktion von dem Wert $G(V_e)$ variabel ist, gewichteten Wert von $G(V_e)$ ist.

4. Vorrichtung nach Anspruch 2, dadurch gekennzeichnet, daß die Steuerschaltung (6) ferner einen zweiten Ausgang aufweist, der ein Signal mit dem Wert $F(V_e)$ liefert; und daß die Korrekturschaltung (5) enthält:

— einen ersten, einen zweiten und einen dritten Multiplizierer (21, 22, 23), die jeweils einen ersten und einen zweiten Eingang sowie einen Ausgang aufweisen, wobei die zweiten Eingänge mit dem zweiten Eingang der Korrekturschaltung (5) verbunden sind;

— einen dritten Eingang, der mit dem Ausgang der Bestimmungsschaltung (4) verbunden ist;

— einen vierten Eingang, der mit dem zweiten Ausgang der Steuerschaltung (6) verbunden ist;

— eine Subtrahierschaltung (7) mit drei ersten Eingängen, die jeweils mit einem der drei ersten Eingänge der Korrekturschaltung (5) verbunden sind, und einem zweiten Eingang, der mit dem dritten Eingang der Korrekturschaltung (5) verbunden ist, sowie drei Ausgängen, die jeweils mit einem der drei ersten Eingänge der Multiplizierer (21, 22, 23) verbunden sind, um die Werte $V_{e1} - V_e$ bzw. $V_{e2} - V_e$ bzw. $V_{e3} - V_e$ zu liefern;

— eine Addierschaltung (9) mit drei ersten Eingängen, die jeweils mit einem der drei Ausgänge der Multiplizierer (21, 22, 23) verbunden sind, einem zweiten Eingang, der mit dem vierten Eingang der Korrekturschaltung (5) verbunden ist, und drei Ausgängen, die jeweils an einen der drei Ausgänge der Korrekturschaltung (5) angeschlossen sind, um die Werte $DV_{S1} + F(V_e)$ bzw. $DV_{S2} + F(V_e)$ bzw. $DV_{S3} + F(V_e)$ zu liefern, worin $DV_{S1}$, $DV_{S2}$, $DV_{S3}$ die Werte sind, die jeweils von einem der Ausgänge der drei Multiplizierer (21, 22, 23) geliefert werden.

5. Vorrichtung nach Anspruch 1, dadurch gekennzeichnet, daß die Steuervorrichtung (6) umfaßt:

— einen nichtlinearen Vierpol (11) mit variablen Kenndaten, mit einem Steuereingang zur Einstellung seiner Übertragungsfunktion, einem Eingang, der mit dem Eingang der Steuerschaltung (6) verbunden ist, und einem Ausgang, der ein Signal mit dem Wert $F(V_e)$ liefert;

— einen Teiler (10) mit einem ersten Eingang, der mit dem Eingang der Steuervorrichtung (6) verbunden ist, einem zweiten Eingang, der mit dem Ausgang des Vierpols (11) verbunden ist, und einem Ausgang, der mit dem ersten Ausgang der Steuervorrichtung (6) verbunden ist, um ein Signal mit dem Wert $G(V_e) = F(V_e)/V_e$ zu liefern;

— Mittel (12, 13, 14) zur Bestimmung des Histogramms der Werte $V_e$ sowie der kumulativen Verteilungsfunktion dieser Werte und um daraus Werte von Parametern abzuleiten, welche die Funktion F definieren und derart sind, daß das Histogramm der Werte $F(V_e)$ in Funktion von den Werten $V_e$ eine vorbestimmte Verteilung aufweist, mit einem Eingang, welcher mit dem Eingang der Steuerschaltung (6) verbunden ist, und einem Ausgang, der mit dem Steuereingang des Vierpols (11) verbunden ist.

6. Vorrichtung nach Anspruch 1, dadurch gekennzeichnet, daß die Steuerschaltung (6) umfaßt:

— Mittel (31, 32) zur Bestimmung des Histogramms der Werte $V_e$ sowie der kumulativen Verteilungsfunktion dieser Werte und um daraus die Werte der Funktion $F(V_e)$ abzuleiten, derart, daß ihr Histogramm in Abhängigkeit von den Werten von $V_e$ eine vorbestimmte Verteilung aufweist, mit einem Eingang, welcher an den Eingang der Steuerschaltung angekoppelt ist, und einem Ausgang;

— einen Mikroprozessor (30), der einen mit dem Ausgang dieser Mittel (31, 32) verbundenen Eingang und einen Datenausgang sowie einen Adreßausgang aufweist, um die Werte von $F(V_e)/V_e$ zu berechnen;

— einen Arbeitsspeicher (29) zum Speichern der Werte von $F(V_e)/V_e$, mit einem Schreib-Adreßeingang, welcher mit dem Adreßausgang des Mikroprozessors (30) verbunden ist, einem Dateneingang, der mit dem Datenausgang des Mikroprozessors (30) verbunden ist, und einem Lese-Adreßeingang, welcher an den Eingang der Steuerschaltung (6) angekoppelt ist, sowie einem Datenausgang, der mit dem Ausgang der Steuerschaltung (6) verbunden ist.

7. Vorrichtung nach Anspruch 1, dadurch gekennzeichnet, daß das Signal mit dem Wert $V_e$ durch dasjenige der Farbinformationssignale gebildet ist, welches zum betrachteten Abtastzeitpunkt den größten Wert aufweist.

Fig.1

Fig.2

$Ve_1 = E_Y$
$Ve_2 = D_R$
$Ve_3 = D_B$

CIRCUIT DE DÉMATRIÇAGE 25

4

$E_R$  $E_V$  $E_B$

CIRCUIT DE SÉLECTION

26  $Ve = MAX(E_R, E_V, E_B)$

CIRCUIT DE DÉTERMINATION

CIRCUIT DE CORRECTION

21
22
23

$H(Ve)$

CIRCUIT DE PONDÉRATION
24

5
15
16
17

$G(Ve) = \dfrac{F(Ve)}{Ve}$

CIRCUIT DE COMMANDE

C.A.N. 27

C.N.A. 28

ADR. LEC.    DONNÉES 29
MÉMOIRE
ADR. ÉCR.    DONNÉES

30
MICROPROCESSEUR

6

31
INTÉGRATEUR NUMÉRIQUE

32
ACQUISITION D'UN HISTOGRAMME